# EUROPEAN PATENT APPLICATION

(11) **EP 1 489 783 A1**
(43) Date of publication of application: **22.12.2004**
(21) Application number: 03013876.2
(22) Date of filing: 19.06.2003
(51) Int. Cl.: H04L 12/56, H04M 1/60

(54) **Multiple devices sharing a common accessory**

(71) Applicant: Sony Ericsson Mobile Communications AB, 221 88 Lund (SE)
(72) Inventor: Angelhag, Anders, 227 38 Lund (SE)
(74) Representative: Lindberg, Olle Nils Olof

(57) **Abstract**

A method and an apparatus for controlling connection between a plurality of connectable devices, wherein individual indicia is associated with a first device having a predetermined identity and being connectable to a second device; and said indicia from the accessory is output in a manner that is observable by a user in response to said first device being selected for connection to said second device.

## Description

### Technical Field

The present invention relates in general to user interfaces for controlling connection between a plurality of communicatively connectable devices.

### Background

It is a common situation in the usage of for example telecommunication or data processing devises that a plurality of devices are communicatively connectable. A general example is the situation when among a plurality of connectable devices two specific devices are selected to be communicatively coupled in case an actual connection is established. A more specific example is the case when accessories or peripheral equipment are shared by a plurality of master devises. One such example is when one data terminal is used to access a number of different computers where individual data processing is taking place. Another such example is when a single user interface is used to alternately access and operate a plurality of different telephone channels or different mobile telephone units belonging to different users. In this connection, it is usually important to know the identity of the device that is currently accessed. Therefore, a communication contact is defined and established between the accessory and the identified device in a pairing or a connecting process. When changing the device that is accessed by the accessory, a communication contact has to be defined for the new device and thus a new pairing or connecting process has to be performed.

The latter is for example the case for a car hands free accessory that communicates with a mobile telephone unit by means of the short-range radio communication system that goes under the trademark Bluetooth™. Such car hands free equipment for stationary installation in the vehicle normally includes loudspeaker, microphone, electronics box, cabling and a control panel. The control panel would be provided with a few electromechanical keys or the like for operating basic functions such as accepting calls, rejecting calls, activating voice dialling, adjusting call volume or ring volume and starting pairing or connecting procedures. There might also be one or more LED:s to indicate some kind of status. In a set up of such a hands free accessory where several different telephone devices alternately shares the accessory, a re-pairing or re-connection process has to be performed each time the device is changed.

One purpose of the re-connection process is to eliminate the risk that the wrong telephone is connected to the hands free accessory when several telephones simultaneously are within the communication range, and to provide the means for the user to make the hands free accessory connect with his particular telephone. This re-connecting procedure requires the user to operate the hands free accessory as well as the telephone through the respective user interfaces of each of these devices. The re-pairing or re-connection process is however not needed when the user knows that the current device is the one that was used last time. Basically, however, the user needs to perform the re-connecting process every time someone else has used the hands free accessory and every time the user is uncertain whether someone else might have used it.

The underlying technology implemented in current Bluetooth™ hands free devices makes, in a simplified description, use of a device list that here is called a Last Used First to Use list, hereinafter referred to as a LUFU list. Basically, the LUFU list associates the name or identity of telephone units that are alternately used together with the hands free accessory with a record of the time when each telephone was connected the last time and with a ranking position. The list will on its top position have the telephone that was last connected and other telephones that have been previously connected in falling positions dependent on the last time connected. The hands free accessory will always first try to connect to the last connected telephone, for example telephone Identity3 currently having position 1, when it establishes short range radio communication with a telephone. When another telephone, for example telephone Identity 4 currently having position 2, is re-connected it will get position 1. The former position 1 telephone Identity3 is then pushed down to position 2. The thought behind the implementation of this device list is that the most probable user of the Bluetooth™ accessory is the one who used it the last time and therefore the last connected telephone is the first one for which a new connection is proposed.

However, current solutions for identifying and connecting the accessory to the proper device when alternating devices are tedious to carry out and requires the operation of the user interfaces of the accessory as well as of the telephone unit. Moreover, re-pairing might be forgotten by the user, possibly resulting in the wrong device being connected to the accessory. The intention to bring convenience, freedom and simple usage is not fulfilled in such use cases.

There is therefore a need for an improved connection method and apparatus for controlling the connection.

### Related Art

The Bluetooth™ standard is well known and is for example available on the Internet website www.bluetooth.com. In this standard, for example in the BLUETOOTH SPECIFICATION Version 1.1 of February 22 2001, chapter 10 CHANNEL CONTROL describes how master and slave connection is defined and established in Bluetooth™ connected devices. Several devices can be connected to a common device and shares the same channel to form what is called a piconet, which is a connection that simultaneously involves a plurality of devices.

The patent publication US 2002/0090912 A1 to Cannon et al shows an example of prior art with regard to how a Bluetooth device for a so called piconet network finds other Bluetooth devices within a specific range based on a PIN or a pass code associated with it. In this technique, a Bluetooth device has a pass code or a PIN selection/input module that receives from a user a PIN or pass code associated with another Bluetooth device in a piconet. A first Bluetooth device finds within a specific range other Bluetooth devices that include matching PIN or pass code. However, this technique is directed to the connection of one at a time of a plurality of devices that are connectable to an accessory.

There are products available on the market for wirelessly connecting a stationary mounted hands free system with a mobile telephone unit. An example of such a product is the Sony Ericsson Bluetooth™ Car Handsfree HCB-30, which currently is shown on the www.sonyericsson.com Internet website. This hands free equipment communicates with a telephone unit via a short range radio communication according to the above mentioned standard technology that goes under the trademark Bluetooth™. The user controls basic functions of the telephone via a keypad mounted on the dashboard and designed as a five button control panel configured to activate the telephone, to control loudspeaker volume, and to answer or reject calls. Another similar product is the Sony Ericsson Advanced Car Handsfree HCA-20, also currently shown on the www.sonyericsson.com Internet website. The HCA-20 is further provided with means for voice recognition to enable voice dialing as a means for controlling the telephone. It also has functionality for muting a car stereo for incoming calls. These products are examples of such devices that the invention concerns.

### Problem to be Solved by the Invention

The general problem that the invention seeks to solve is to achieve a user interface with an improved procedure for controlling connection of a first device to a selectable second device among of a plurality of selectable devices.

An aspect of the problem is directed to controlling the connection of an accessory device to one of a plurality of selectable main devices.

An aspect of the problem deals with hands free equipment that communicates wirelessly with a telephone unit, for example by means of short range radio communication such as Bluetooth™ technology. This aspect of the problem concerns the problem of alleviating the complex re-pairing and re-connecting process that occurs as soon as a plurality of different telephones are used with the same hands free equipment. In particular, it is a problem aspect that several time consuming key-presses are needed on the hands free accessory as well as on the telephone.

Another aspect of the problem is that it may occur that the user forgets to re-connect his device to the accessory or does not know that another device has been connected. For example in the case with a car hands free accessory it may occur that several of the alternating telephones are within communication range from the hands free accessory, and the user will not know which telephone he is using.

Yet another aspect of the problem is that if the user realizes the fact that he is connected to the wrong telephone in a driving situation, he might be tempted to perform the re-connecting process while driving, which is a danger to the driving safety.

A further aspect of the problem is to control the connection status in the sense of being active or non-active, respectively, for a plurality of devices that are simultaneously connected to a common shared device.

### Object of the Invention

It is therefore a general object of the present invention to provide a method and a device for simplified control of connection between a plurality of connectable devices.

### Summary of the Invention

The object of the invention is achieved and the problem is solved by associating a first device that is connectable to a second device with indicia that is capable of being output to a user. The indicia is for example a colour of an LED or of a background light of a display on a user interface of at least one of said first and second devices. Different devices that are connectable are associated to different indicia, and these associations are stored in a data storage device of the at least one of said first and second devices. The user of a specific selectable device is supposed to know the indicia that is associated with this particular device. When a first device is selected to be connected to a particular second device, the indicia that is associated with said first device is output for example via said LED and is thus observable by the user as a feedback signal. Thus, by outputting the indicia of the selected first device in a manner that is observable by the user of the second device, the user of this second device knows that the intended device is selected to be connected. Similarly, the user can observe an output indicia that is associated with some other connectable device and thereby the user knows that some other device than the intended device is selected to be connected to his device. For the purpose of achieving an easily performable change of device to select for connection, the invention according to one aspect is adapted to receive an input signal from the user for changing the selected device. In response to the input change signal the device switches from selecting for connection a one particular device to an other device, and to output the indicia associated with this other selected device. When the user observes the output indicia that is associated with the device that is intended to be selected for connection, the user ceases to input change signals and in response thereto the selection is a fact and possible other procedures for preparing a connection may thereafter be executed. Thus, when selecting a changed device for connection, the output indicia has the function of a feedback signal of what device the user selects. When the device is is thus selected for connection the output of the indicia that is associated with this particular device is maintained as explained above. This allows a very simple and intuitive manner as well as a simple user interface for controlling the selection for connection between a plurality of connectable devices.

Preferably, the indicia of the feedback signal is substantially continuously output as a signal indicating a first device that is currently selected for connection to a second device. In other words, as long as a particular device is selected for connection, the indicia that is associated to this particular device is output in a manner that is observable by the user.

In a case that said first and second devices are more or less mutually independent, the respective indicia of such a selected pair of devices may be output from the respective first and second devices. That is, the indicia associated with the first device is preferably output at the second device, and vice versa.

In another case where one of the devices is more or less dependent on the other device, the indicia associated with the selected device is preferably output from the device that is currently handled by user. A specific such example is when a first device is selected for connection to a second device that is an accessory, such as a telephone hands free equipment to which different telephone devices are connectable. In this example, the indicia of the device that is selected for connection to the accessory is output from the accessory.

According to an aspect of the invention a plurality of selectable devices that can be connected to a device, here exemplified by an accessory, are initiated by means of a pairing process. In this pairing process associations of device identities with indicia are stored in the accessory. For the purpose of re-connecting to a device after an interruption there is a predetermined order of priority for each selectable device. The control of selecting for connection a device by default, i.e. in the absence of any particular selection input, is based on this order of priority. In one embodiment the order of priority for selecting for connection is based on an order of priority following the rule of Last Used First to Use (LUFU) and therefore also a time of last usage is stored for each device. Consequently, when starting a connecting process, this embodiment of the inventive accessory thus outputs the indicia of the last used device and starts a connecting process for connecting this device. If the user inputs a change signal, the accessory outputs the indicia of the next device in a falling order of time of last usage and starts a connecting process with this device. Repeated inputs of a change signal results in that the accessory steps through the selectable devices and outputs each respective indicia in a similar manner of falling order.

In a further development of the invention, the selectable devices may alternatively or in addition be associated with a predetermined fixed order of priority. One or more of the selectable devices are associated with an indication of priority, and when initiating a connecting process the accessory will start with the device having the highest fixed priority and thereafter try to connect the devices having the subsequent priorities. This embodiment is useful for frequent but alternating users of an accessory or devices operated via the accessory, which devices each would be associated with a suitable fixed priority. The most used device would naturally be assigned the highest priority. This entails simpler usage since the most frequent users or the most frequently used devices are capable to be selected for connection automatically even if another device has been selected for connection in between.

This latter embodiment with fixed priorities can advantageously be combined with a LUFU order of priority for temporary users of the accessory or worded differently for devices that are temporarily operated via the accessory. These LUFU ordered devices are operated as explained above but would preferably have an order of priority lower than those having fixed priorities. This embodiment allows a number of fixedly paired devices to be combined with an unspecified number of temporarily selected or connected devices.

There are different varieties of the inventive concept. For example, one embodiment comprises the functionality of allowing the user to select the indicia that is associated with a particular device. This is preferably implemented in connection with an initial pairing process. So for example, the user can select his personal background colour on a display by means of predetermined input control signals. In another variety, the indicia is fixedly coupled to a certain position in the order of fixed priority. This latter variety allows a particularly low cost implementation of the invention.

The invention entails a number of advantages. The invention provides an intuitive and simple control interface for the selection for connection of a first device to a second device with an efficient feedback to the user. With a visible, audible or tactile indication of the device that is selected for connection and thus will be connected or is connected, a very efficient and easy to understand feedback to the user is achieved. It is possible to implement to a very low cost, since simple input and output components can be used. For the selectable and once paired devices there is no need to go into a new pairing process or to go through a connection process requiring the usage of user interfaces of for example an accessory as well as of a device selected for connection. This is a major simplification and enhancement of the usage of for example an accessory that is shared by a multiple of users.

In the explanation of the invention, the terms *connection, re-connecting* and the like are used to describe aspects of a first device being coupled to a specific second device, such as an accessory being coupled to a specific main device. However, it should be understood that these terms in certain embodiments wherein a plurality of main devices are simultaneously coupled to a common accessory, also refer to the status of a specific main device being *active* or *activated* in communication with the accessory. In different applications there are a number of levels of connection or connectivity, for example where one device is *preferred* for connection but other devices are connectable under certain circumstances. The terms *selected* and *selected for connection* are used as a common term for the users selection of the device that is accepted for connection or preferred for connection irrespective of the level of actual connection or state of being active/non-active.

Aspects and embodiments of the invention further comprise different combinations of features as follows.

A method of controlling connection between a plurality of connectable devices, comprising the steps of: associating individual indicia with a first device having a predetermined identity and being connectable to a second device; and outputting said indicia in a manner that is observable by a user in response to said first device being connected to said second device.

Further, the method may comprise:

The steps of outputting said indicia in response to a command for selecting said first device for connection to said second device.

The step of storing the device identity linked with connection parameters for said first device and with control data for outputting the associated indicia of said first device.

The steps of changing from outputting a first indicia associated with a first device to outputting a second indicia associated with a second device in response to an input change signal, and establishing a selection for connection of said second device

The step of changing from selecting a first connectable device and outputting the indicia of said first device to selecting a second connectable device and outputting the indicia of said second device in response to receiving an input change signal.

The step of performing a re-connection process for connecting a selected first device to a second device.

The step of defining in a pairing process connectability parameters for connecting a first device to a second device. Connectability of a plurality of devices is defined and associated individual indicia as well as individual connection parameters are stored linked with the device identity of each of said devices. Indicia to be output from a second device may be stored in the first device and be communicated to the second device.

In order to enable different schemes of automatic or semi-automatic selection of device, embodiments comprise the step of storing a predetermined order of priority for selecting for connection each of a plurality of connectable devices. Said order of priority is in one embodiment based on a last selected first to use scheme and a record of the last time selected is stored linked to each of said connectable device identities. When connecting after an interrupted connection, the indicia of the device that was last selected are output and said last selected device is selected for connection. In response to receiving an input change signal, outputting the indicia associated with the next device in a falling order of last usage and selecting for connection to said next device.

A variety of the invention comprises storing a predetermined order of priority for selecting for connection each of a plurality of connectable devices, wherein said order of priority is based on an individual fixed priority that is associated with each of said connectable devices. A record of a fixed priority is stored linked to each of said connectable device identities. After an interrupted connection, the indicia of the device that has the highest fixed priority is output and a said highest priority device is selected for connection. In response to receiving an input change signal, outputting the indicia associated with the next device in a falling order of fixed priority and said next device is selected for connection. Another variety comprises storing a combination of a first predetermined order of priority for selecting for connection a plurality of connectable devices, wherein said first order of priority is based on an individual fixed priority that is associated with a first number of connectable devices, and a second predetermined order of priority for selecting for connection each of a plurality of connectable devices, wherein said second order of priority is based on a last used first to use scheme for a second number of connectable devices.

The indicia associated with a device is in one embodiment selectable in response to a predetermined sequence of input control signals. In another embodiment the indicia is associated with a fixed position in a predetermined order of priority and the fixed position is associated with a predetermined device.

Different kinds of indicia are employed in different embodiments. For example the indicia is visible and is output by means of a visible signal output device; the indicia is a colour that is output by means of a colour emitting device. When the indicia is a visible symbol it is output by means of a display, or the indicia is a combination of characters that is output by means of a display. The indicia may be audible and is then output by means of a sound emitting device. The indicia may be tactile and is then output by means of a sensory detectable stimulation device.

In common embodiments the devices are connected by means of a wireless communication link, preferably by means of a short range radio communication link. In other embodiments the devices are connected to said devices by means of a wired communication link.

In an embodiment application of the invention one of said devices is an accessory to which a plurality of other devices are connectable. The accessory may be a hands free equipment and the devices mobile telephones.

A general embodiment of an apparatus for controlling connection between a plurality of connectable devices, said apparatus being adapted to defining connectability parameters for connecting a first device having a predetermined identity to a second device; and comprises a device operable to associate individual indicia to said first device; and an output device operable to output said indicia in a manner that is observable by a user when said first device is selected for connection to said second device. Further there is a data storage adapted for storing the device identity linked with connection parameters for said device and with control data for outputting the associated indicia of said device. The apparatus would further be adapted to changing from selecting for connection a first connectable device and outputting the indicia of said first device to selecting for connection a second connectable device and outputting the indicia of said second device in response to receiving an input change signal from a signal input switch. The apparatus would also be adapted to performing a re-connection process for connecting a selected first device to a second device.

An embodiment of the invention applied in a hands free/telephone application is described as a method of controlling connection between a plurality of telephone devices and a hands free device; comprising in the steps of: associating individual indicia with an identifiable telephone device; outputting said indicia from said hands free device in response to said identifiable telephone device being selected for connection to said hands free device. Preferably, the indicia is coloured light. This embodiment would also be employed in an apparatus for controlling connection between a plurality of telephone devices and a hands free device; comprising in a device operable to associate individual indicia with an identifiable telephone device; and an output device operable to output said indicia from said hand free device in response to said identifiable device being selected for connection to said hands free device. Preferably, the indicia is coloured light output by means of a light emitting diode (LED).

Different embodiments of the apparatus in accordance with the invention are further adapted to perform the steps or further comprising the features as recited above.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

The invention will be further explained with reference to the accompanying drawings, in which:
Fig 1 shows a schematic overview of an exemplifying embodiment of the invention with a device in the shape of an accessory communicating with one of a plurality of alternating telephone devices;
Fig 2 and Fig 3 show flow charts of method steps in embodiments of the invention.

### Detailed Description of Embodiments

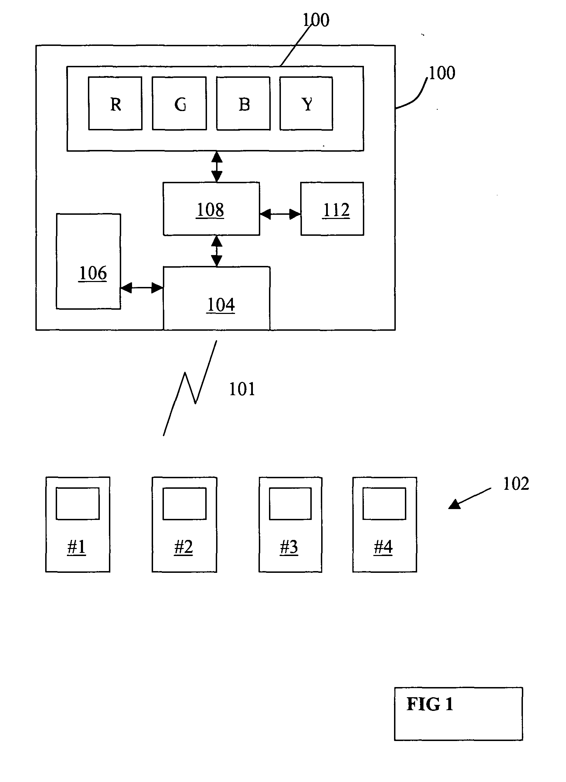

**Figure 1** shows schematically an accessory device 100 that is arranged to have a communication 101 with alternating telephone devices 102 having device identities #1, #2, #3, #4, respectively. The accessory 100 comprises a communication front end 104 for the communication 101 and accessory functionality components 106. In this example, the invention is explained by means of an embodiment implemented in a hands free accessory that is adapted for wireless short range radio communication by means of Bluetooth™ technology with a number of mobile telephones that are alternating to be coupled to the accessory. Thus in this example the communication front end 104 comprises a per se known Bluetooth front end. However, in other embodiments the devices that share the accessory can also be coupled to the accessory over wired links or by means of other wireless technologies implemented by means of a correspondingly devised communication front end. Basically, the use case in which this exemplifying embodiment of the invention is employed is when a main device is operated from the accessory, and a first main device having a first identity can be changed for a second main device having a second identity.

The accessory functionality components 106 would in this example of a hands free accessory comprise not shown and per se known electronic circuitry, loudspeaker, microphone, signal processor and wiring, which via the communication front end 104 and after connection with a telephone device thus is used as an interface to operate the telephone. The accessory 100 of fig 1 further comprises a connection control stage 108 coupled to the communication front end 104 and adapted to control and perform a connecting process or re-connecting process in order to connect the accessory to a specific and selectable device. In this example thus one of the telephones 102 with the identities #1, #2, #3, #4. The connection control stage 108 is further coupled to an output device 110 adapted to output indicia of the identity of the telephone device that currently is selected for connection to the accessory. This output device is for example a display or one or more LED:s. In the example of fig 1, this output device comprises four LED:s R (red), G (green), B (blue) and Y (yellow), adapted to emit the respective colours defined in the brackets. When a specific telephone device that is associated with for example the colour Red is selected for connection to the accessory, the LED R is lit, and so on.

The connection control stage 108 is also coupled to an input switch 112 for changing the indicia for actuating a selected for connection of a changed device having an identity corresponding to the input indicia and for associating a device identity with a particular indicia. The input switch 112 can be realised for example by means of a push button or a wheel switch. The connection control stage 108 comprises a data processor and a data storage operable to implement a list of devices for which connection between the accessory and the respective devises have been initialised, and which devices can be selectively re-connected. In accordance with the inventive concept, each of the connectable devices is associated with an indicia that is output to the user via a user interface of the accessory when the device is selected for connection. This provides a feed back to the user of which one of the devices that is currently selected for connection. Furthermore, the user can change the output indicia by means of the input switch 112 in order to actuate a change of selected device and possibly to trigger a re-connection process with the device that is associated with the thus currently output indicia. The connection control stage 108 is thus adapted to control the re-connecting process dependent on the associated records of this list and dependent on the users selection of a record dependent on the output indicia.
Such a list of devices would in one embodiment and for the sake of explanation a simplified example comprise the following records, i.e. position for example according to a Last Used First Used order, device identity, associated indicia and last time selected for connection. In a real implementation this list would further comprise a number of per se known parameters for defining connectability of the devices to the accessory. In a perhaps more strict definition, the record of the associated indicia would actually store control data for actuating an output of the associated indicia. Similarly, it is perhaps more correct to describe this priority scheme as a rule of last selected -first to use order.

| **Position** | **Device Identity** | **Associated Indicia** | **Last time connected** |
|---|---|---|---|
| 1 | #1 | Red | 2002-10-10 15:32 |
| 2 | #2 | Green | 2002-10-07 13:12 |
| 3 | #3 | Blue | 2002-08-12 22:11 |
| 4 | #4 | Yellow | 2002-01-31 14:57 |

In this example, the indicia that is associated to each of the devices is a colour. In other embodiments, however, the indicia can have another characteristic or presentation. For example, a variety of the colour indicia can be used as a background colour in a display, or the indicia can be tactile or audible and be output and input by a suitable output device. Thus, indicia that is tactile would be output by means of a sensory detectable stimulator, whereas audible indicia would be output by means of a sound emitter. Further, the indicia can be a symbol or character, for example an indicia in plain text on a display or by means of any other symbol or signal that is recognisable by the user. In practice, for example in the case of a car hands free accessory being used by different users to operate their personal mobile telephones, each user is assigned a particular indicia characteristic, for example colour, and then swiftly recognises his indicia.

The connection control stage 108 can for example be adapted such that the list is stepped through by means of repeated actuation of the switch 112 and for each step outputting the indicia of a current device identity. The user selects the device to connect by stopping at the intended indicia output. Possibly, the selection is followed by a re-connection process performed by the connection control stage 108.

This functionality is implemented by performing a pairing process or an associating process possibly comprising the establishing of an interruptable and re-connectable connection or activation of a connection between the accessory and each selectable device, and associating indicia to each such device. Preferably, a new device that a user wishes to pair with the accessory is by default paired into the device list. Thereafter, the re-connection process is ready to run as described above. Though, care has to be taken to avoid that occupied indicia are associated to other devices in an uncontrolled manner. For this purpose, embodiments of the invention comprise a releasable locking mechanism for locking associated indicia against unintentional changes.

So when making use of an accessory devised in accordance with the invention, a user first initiates a pairing with his device and by means of a predetermined user interface input, for example a specified sequence of switch actuation, selects a colour that is thereafter associated with his device. In operation of the accessory and connected device the user immediately receives a feedback, in this example a colour or colour combination, signalling the identity of the device that is selected for connection. If the user observes the indicia that is associated with the device that he intends to use, then he can proceed in full assurance of using the correct device. If on the other hand the user observes an indicia that he knows is not associated with the intended device, then the user simply enters a change to the wanted indicia by means of the input switch on the accessory. Possibly a re-connecting process for the selected device may also be initiated direction after the changed selection.

Put into the concrete example of using a car hands free accessory that is used by different drivers, the following simple usage model is achieved.
1. User/driver selects or receives an indicia, here a colour, while pairing the accessory with his particular telephone.
2. Thereafter, user/driver checks the indicia colour while igniting the car:
   - If correct colour is observed on the user interface of the accessory, then the intended telephone is selected for connection.
   - If incorrect colour, then the intended telephone is not selected for connection. User/driver easily selects the intended telephone by actuating a switch by pushing a button or turning a wheel until his colour indicia is displayed, and in response the accessory will connect the telephone that is associated with the selected colour indicia.

In a further developed variety of the invention, the list also comprises one or more fixed positions each having a predetermined priority in the sense of the order in which the devises should be re-connected. A part of this list may also comprise a Last Used First to Use list (LUFU list) as described above. Thus a simplified example of such a list would comprise records for priority, position, device identity, associated indicia, and for the LUFU part of the list also a record with an indication of last time connected for the device.

| **Priority** | **Position** | **Device Identity** | **Associated Indicia** | **Last time connected** |
|---|---|---|---|---|
| 1 | Fixed position 1 | #1 | Red | NIL |
| 2 | Fixed position 2 | #2 | Green | NIL |
| 3 | Fixed position 3 | #3 | Blue | NIL |
| 4 | LUFU Pos 1 | #4 | Yellow | 2002-01-31 14:57 |
| 5 | LUFU Pos 2 | #5 | Yellow | 2002-01-10 10:45 |

In this example, there are three fixed positions for three devices having the identities #1,#2,#3 having a falling order of priority 1 to 3. So for example, the fixed positions are preferably used for regular users of the accessory, or perhaps more correctly for devices that are regularly connected to the accessory. The devices that are listed in the LUFU part of the list would preferably be such devices that are connected temporary. The accessory will always start in a position seeking to re-connect to the device having the first fixed position, here thus device #1, and signalling the associated indicia Red as background display light or a red LED. If the user wants to connect another one of the selectable devices, he simply steps through the list as explained above.

In an application of the invention in for example a Bluetooth hands free telephone environment there are a number of levels of connectivity or connection. In the hands free/telephone example there are levels when:
1. The device units are paired and are thus mutually aware of the respective addresses, but are not communicating for example because they are out of range.
2. The device units are connected. In a first sublevel i. there is no active communication until a user or an application so requests, for example due to an incoming call or an activation of voice control. In a second sublevel ii. there is a sporadic communication between the device units in order to maintain a Bluetooth link, however in this sublevel there is no communication on application level or initiated by the user.
3. The device units are connected and are communicating information, for example by maintaining a telephone call, in connection with an incoming call or when voice control is activated.

This is an example of the different varieties or levels of connection that may exist in an environment where the invention is employed. Preferably, the invention is applied such that it operates independently of the level of connection. As explained above, the term chosen in this text to describe this feature is *selected for connection,* which thus covers all different levels of connection that may occur and for example denotes the fact that a specific connection is selected, is preferred, can be accepted, is actually connected on different levels and so on.

So for example in the use case with the invention employed in a hands free/telephone application the important effect of the invention is to indicate to the user the telephone from which an incoming call can be accepted by the hands free device unit, and the telephone through which an outgoing call should be switched. Thus, the telephone device that is selected for connection is indicated by means of the output indicia. Possibly, an embodiment of the invention may be designed such that the indicia of the device that is selected for connection is output as long as the devices are in some kind of stand by mode, and alternatively or in addition indicate actual communication, such as a telephone call, during the time it occurs by means of a further indicia that is independent of the device identity, for example the colour white.

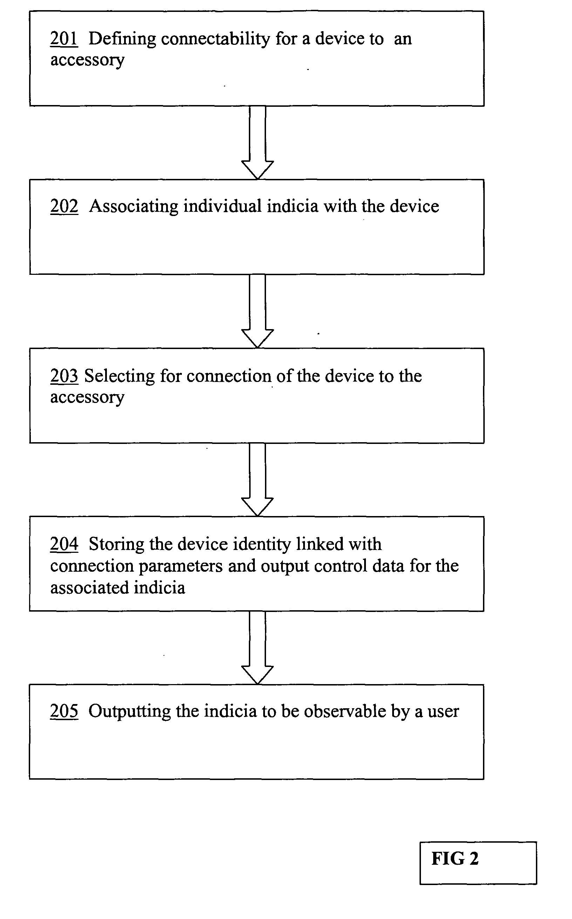

**Figure 2** shows a flow chart of steps comprised in a general embodiment of the invention each step comprising the described activities. It is comprised in step:
- 201: Defining in a pairing process connectability to the accessory for a device having a predetermined identity.
- 202: Associating individual indicia with said device.
- 203: Selecting for connection of said device to the accessory.
- 204: Storing the device identity linked with connection parameters for said device and with control data for outputting the associated indicia of said device.
- 205: Outputting said indicia in a manner that is observable by a user.

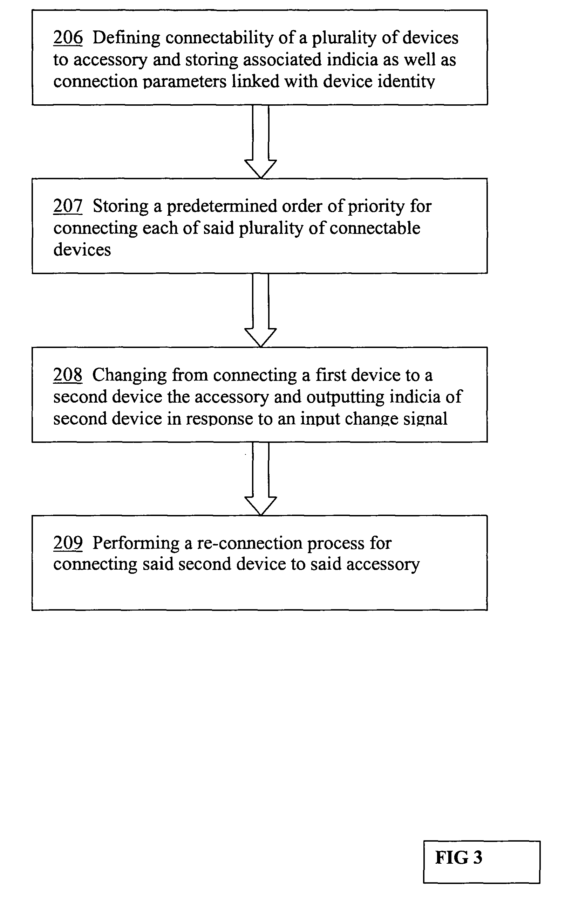

In **figure 3** there is another flow chart of an embodiment of the invention showing the steps of changing connected device, wherein it is comprised in step:
- 206: Defining connectability of a plurality of devices to the accessory and storing associated individual indicia as well as individual connection parameters are linked with the device identity of each of said devices.
- 207: Storing a predetermined order of priority for connecting each of a plurality of connectable devices.
- 208: Changing from connecting a first connectable device and outputting the indicia of said first device to connecting a second connectable device and outputting the indicia of said second device in response to receiving an input change signal.
- 209: Performing a re-connection process for connecting said second device to said accessory.

There are a number of further varieties and embodiments of the invention.

In one embodiment the indicia of the particular main device, for example a telephone, is stored in a memory of the main device itself. In this case, the indicia is communicated to the accessory for output to the user when this particular main device is connected to the accessory. In this manner, the user of the main device can have an indicia that is selected beforehand and is output on any such accessory, without any process for associating a particular indicia to a particular main device.

One embodiment is directed to use a common accessory device, such as an interface unit, to access and control different applications, for example gaming applications or gaming devices. In this case, the indicia are associated with particular games, game devices or identities of games.

In an embodiment directed to music applications, the invention is adapted to show indicia and control the selection of the main device that plays the music, i.e. the source of the currently played music, for example showing the indicia on a loudspeaker or on a headset. Or inversely showing on a music player indicia of the speaker system or the like to which the music is currently output.

In an embodiment directed to remote control applications with a remote control unit devised to control a plurality of different devices, the invention is adapted to show indicia and control the selection of the main device that is currently controlled by the remote control unit.

One embodiment is directed to an accessory in the shape of a supplementary Human Machine Interface (HMI) that is a separate and possibly remote interface for a screen, such as a television set or a car display, showing an output of a main device. In this case, indicia showing what main device is the source of the output is presented on the HMI and thus no area of the screen is needed for this purpose.

The invention has been explained and described by means of examples, but it can be realised in a variety of manners within the scope of the accompanying claims.

## Claims

1. A method of controlling connection between a plurality of connectable devices,
**characterised in** the steps of:
associating individual indicia with a first device having a predetermined identity and being connectable to a second device; and
outputting said indicia in a manner that is observable by a user in response to said first device being selected for connection to said second device.

2. The method of the preceding claim, further comprising the step of outputting said indicia in response to a command for selecting said first device for connection to said second device.

3. The method of any of the preceding claims, further comprising the step of storing the device identity linked with connection parameters for said first device and with control data for outputting the associated indicia of said first device.

4. The method of any of the preceding claims, further comprising the steps of:
- changing from outputting of a first indicia associated with a first device to outputting a second indicia associated with a second device in response to an input change signal; and
- establishing a selection for connection of said second device.

5. The method of any of the preceding claims, further comprising the step of changing from selecting a first connectable device and outputting the indicia of said first device to selecting a second connectable device and outputting the indicia of said second device in response to receiving an input change signal.

6. The method of any of the preceding claims, further comprising the step of performing a re-connection process for connecting a selected first device to a second device.

7. The method of any of the preceding claims, further comprising the step of defining in a pairing process connectability parameters for connecting a first device to a second device.

8. The method of any of the preceding claims, wherein connectability of a plurality of devices is defined and associated individual indicia as well as individual connection parameters are stored linked with the device identity of each of said devices.

9. The method of any of the preceding claims, wherein indicia of a first device to be output from a second device is stored in the first device and is communicated to the second device.

10. The method of the any of the preceding claims, further comprising the step of storing a predetermined order of priority for selecting for connection each of a plurality of connectable devices.

11. The method of any the preceding claims, further comprising the step of storing a predetermined order of priority for selecting for connection each of a plurality of connectable devices, wherein said order of priority is based on a last selected first to use scheme.

12. The method of the preceding claim, wherein a record of the last time selected is stored linked to each of said connectable device identities.

13. The method of the preceding claim, further comprising the steps of, after an interrupted connection, outputting the indicia of the device that was last selected and selecting for connection to said last selected device.

14. The method of the preceding claim, further comprising the steps of, in response to receiving an input change signal, outputting the indicia associated with the next device in a falling order of last selected and selecting for connection to said next device.

15. The method of any the preceding claims, further comprising the step of storing a predetermined order of priority for selecting for connection each of a plurality of connectable devices, wherein said order of priority is based on an individual fixed priority that is associated with each of said connectable devices.

16. The method of the preceding claim, wherein a record of a fixed priority is stored linked to each of said connectable device identities.

17. The method of the preceding claim, further comprising the steps of, after an interrupted connection, outputting the indicia of the device that has the highest fixed priority and selecting for connection to said highest priority device.

18. The method of the preceding claim, further comprising the steps of, in response to receiving an input change signal, outputting the indicia associated with the next device in a falling order of fixed priority and selecting for connection to said next device.

19. The method of any of the preceding claims, further comprising the step of storing a combination of a first predetermined order of priority for selecting for connection a plurality of connectable devices, wherein said first order of priority is based on an individual fixed priority that is associated with a first number of connectable devices, and a second predetermined order of priority for selecting for connection each of a plurality of connectable devices, wherein said second order of priority is based on a last used first to use scheme for a second number of connectable devices.

20. The method of any of the preceding claims, wherein the indicia associated with a device is selectable in response to a predetermined sequence of input control signals.

21. The method of any of the preceding claims, wherein the indicia is associated with a fixed position in a predetermined order of priority and the fixed position is associated with a predetermined device.

22. The method of any of the preceding claims, wherein the.indicia is visible and is output by means of a visible signal output device.

23. The method of any of the preceding claims, wherein the indicia is a colour that is output by means of a colour emitting device.

24. The method of any of the preceding claims, wherein the indicia is a visible symbol that is output by means of a display.

25. The method of any of the preceding claims, wherein the indicia is a combination of characters that is output by means of a display.

26. The method of any of the preceding claims, wherein the indicia is audible and is output by means of a sound emitting device.

27. The method of any of the preceding claims, wherein the indicia is tactile and is output by means of a sensory detectable stimulation device.

28. The method of any of the preceding claims, wherein the devices are connected by means of a wireless communication link.

29. The method of any of the preceding claims, wherein the devices are connected by means of a short range radio communication link.

30. The method of any of the preceding claims, wherein the devices are connected by means of a wired communication link.

31. The method of any of the preceding claims, wherein one of said devices is an accessory to which a plurality of other devices are connectable.

32. The method of the preceding claims, wherein the accessory is a hands free equipment and the devices are mobile telephones.

33. An apparatus for controlling connection between a plurality of connectable devices, said apparatus being adapted to defining connectability parameters for connecting a first device having a predetermined identity to a second device;
**characterised in**
a device operable to associate individual indicia to said first device; and
an output device operable to output said indicia in a manner that is observable by a user when said first device is selected for connection to said second device.

34. The apparatus of the preceding claim, further comprising a data storage adapted for storing the device identity linked with connection parameters for said device and with control data for outputting the associated indicia of said device.

35. The apparatus of the preceding claim, further being adapted to changing from selecting for connection a first connectable device and outputting the indicia of said first device to selecting for connection a second connectable device and outputting the indicia of said second device in response to receiving an input change signal from a signal input switch.

36. The apparatus of the preceding claim, further being adapted to performing a re-connection process for connecting a selected first device to a second device.

37. The apparatus of any the preceding claims 33-36, further being adapted to perform the steps or further comprising the features of any of the preceding claims 1-32.

38. A method of controlling connection between a plurality of telephone devices and a hands free device;
**characterised in** the steps of:
associating individual indicia with an identifiable telephone device;
outputting said indicia from said hands free device in response to said identifiable telephone device being selected for connection to said hands free device.

39. The method of the preceding claim, wherein the indicia is coloured light.

40. An apparatus for controlling connection between a plurality of telephone devices and a hands free device;
**characterised in**
a device operable to associate individual indicia with an identifiable telephone device; and
an output device operable to output said indicia from said hand free device in response to said identifiable device being selected for connection to said hands free device.

41. The apparatus of the preceding claim, wherein the indicia is coloured light output by means of a light emitting diode (LED).
